# EUROPÄISCHE PATENTANMELDUNG

(11) **EP 2 020 632 A1**
(43) Veröffentlichungstag der Anmeldung: **04.02.2009**
(21) Anmeldenummer: 07014892.9
(22) Anmeldetag: 30.07.2007
(51) Int. Cl.: G06F 3/048

(54) **Eingabevorrichtung mit Anzeigemittel**

(71) Anmelder: SIEMENS AKTIENGESELLSCHAFT, 80333 München (DE)
(72) Erfinder: Bischoff, Toni Gerhard, 91580 Petersaurach (DE)

(57) **Zusammenfassung**

Die Erfindung betrifft eine Eingabevorrichtung mit Anzeigemittel (1), wobei mindestens ein graphisches Objekt (3) zur Anzeige einer Eingabefunktion auf dem Anzeigemittel (1) darstellbar ist. Die Eingabevorrichtung weist erste Mittel zur Erzeugung eines elektrischen Felds (2) und zur Positionierung einer Änderung des Felds (2) auf, wobei die Anzeige, insbesondere die Anzeigegröße, das Aussehen des Objektes (3) an die Änderung des Felds (2) angepasst werden kann. Anzeigeinhalte des Anzeigemittels (1) können also intelligent noch vor einer echten Ausführung eine Eingabetätigkeit geändert dargestellt werden.

## Beschreibung

Die Erfindung betrifft eine Eingabevorrichtung mit Anzeigemittel, wobei die Eingabevorrichtung Mittel zur Erzeugung eines elektrischen Feldes und zur Positionierung einer Änderung des Felds aufweist.

Auf kleinen Touchscreens mit vielen Bildinhalten sind einzelne Objekte oft nicht bzw. nur noch mit einem Touchgriffel (Touchstift) bedienbar, da die Objekte auf einem Tochscreen sehr klein dargestellt sind. Touchgriffel vermindern aber unter anderem die Lebensdauer des Touchscreens bis zu 30%.

Bisher wurde das Problem so gelöst, dass entweder ein größeres und teueres Display einzusetzen oder ein Touchgriffel verwendet wurden.

Außerdem sind die Funktionstasten rund um ein Display in der Regel mit Ikonen/Symbolen am Displayrand beschriftet. Alle Ikonen, die Tasten zugewiesen wurden, nehmen permanent Platz vom Display. Bei Tastengeräten geht oft z.B. bis zu 30% einer Displayfläche durch Anzeige von Ikonen verloren. Wünschenswert soll das komplette Display vom Anwender zum beobachten genutzt werden.

Der Erfindung liegt die Aufgabe zugrunde, eine intelligente Eingabe durch eine Eingabevorrichtung mit einem Anzeigemittel, insbesondere mit einem Berührungsbildschirm, zu ermöglichen.

Diese Aufgabe wird erfindungsgemäß durch eine Eingabevorrichtung mit den Merkmalen des Patentanspruchs 1 gelöst. Die abhängigen Ansprüche betreffen vorteilhafte Weiterbildungen und Ausgestaltungen der Erfindung.

Der Erfindung liegt die Erkenntnis zugrunde, elektrische Signale anhand von Feldstärkeänderungen eines elektrischen Felds intelligent ausgewertet werden. Eine Eingabevorrichtung mit einem Anzeigemittel (Display) wird gegeben, wobei mindestens ein graphisches, textliches oder numerisches Objekt auf dem Anzeigemittel angezeigt wird. Jedes Objekt kann dabei eine entsprechende Eingabefunktion repräsentieren. Diese Eingabevorrichtung weist erste Mittel zur Erzeugung eines elektrischen Feldes, wie z.B. eines elektrostatischen Feldes über dem Anzeigemittel und zur Positionierung einer Änderung des Felds bei einer Eingabe auf, wobei die Anzeige, insbesondere die Anzeigegröße des Objektes an die Änderung des elektrischen Feldes angepasst werden kann. Anzeigeinhalte des Anzeigemittels können also intelligent (also automatisch) noch vor einer echten Ausführung einer Eingabetätigkeit, wie z.B. Berührung des Anzeigemittels oder einer Eingabetaste mit einem beliebigen Gegenstand, z.B. einem Finger eines Benutzers, geändert dargestellt bzw. vergrößert werden. Führt man z.B. seinen Finger in einem gewissen Abstand über das Anzeigemittel, kann die so genannte intelligente Funktion ähnlich wie mittels einer Lupefunktion verwendet werden, ohne eine Eingabe wirklich auszuführen. Wenn das elektrische Feld gering geändert wird, z.B. der Finger noch relativ weit von dem Anzeigemittel oder einer Eingabetaste entfernt ist, wird das Objekt nicht dargestellt oder die Anzeigegröße des Objektes nicht geändert. Dabei kann entweder das ausgeblendete Objekt neu einblendet, oder das eigentlich klein anzeigende Objekt vergrößert dargestellt werden, wenn sich ein Finger einer Eingabetaste oder dem Anzeigemittel nähert. Ein Eingabebedienungsabbruch kann durch einfaches Fortbewegen des Bediengegenstandes durchgeführt werden. D.h., wenn sich der Finger von dem Objekt oder der Eingabevorrichtung weit weg bewegt, wird dieses Objekt wieder ausgeblendet oder in seine ursprüngliche Anzeigegröße dargestellt.

Gemäß einer vorteilhaften Ausgestaltung der Erfindung wird das Anzeigemittel als ein Berührungsbildschirm ausgebildet, wobei eine Eingabefunktion durch Wählen des Objektes ausgeführt werden kann. Da ein normalerweise klein dargestelltes Objekt zur Eingabe vergrößert angezeigt werden kann, wird eine Verwendung von harten oder spitzen Eingabehilfsmitteln, wie z.B. Eingabestift, grundsätzlich vermieden. Somit kann der Bildschirm der Eingabevorrichtung bei der Eingabe vor Kratzern oder hartem, kräftigem Drücken geschützt werden, damit die Lebensdauer der Eingabevorrichtung, insbesondere des Bildschirms, wesentlich verlängert werden kann.

Gemäß einer vorteilhaften Ausgestaltung der Erfindung sind die erste Mittel kapazitive Mittel, wie z.B. Kondensatoren. Durch diese kapazitive Mittel kann ein kapazitives Feld über dem Anzeigemittel erzeugbar ist. Somit kann die Eingabevorrichtung als ein kapazitives Touchscreen ausgebildet werden. Bei herkömmlichen, resistiven Touchscreens erfolgt eine Bedienung mit Finger, Gegenständen oder einem Mauscursor. Bei kapazitiven Touchscreens kann eine Bedienung auch ohne Berührung realisiert werden. Bei letzterem wird der Abstand vom Bildschirm zum Finger ortsaufgelöst ausgewertet.

Gemäß einer anderen vorteilhaften Ausgestaltung der Erfindung weist die Eingabevorrichtung zweite Mittel, wie z.B. resistive Mittel, zur Positionierung und zur Bestätigung einer Eingabe auf. Dadurch kann die Eingabevorrichtung erkennen, welches Objekt auf dem Bildschirm zur Eingabe ausgewählt worden ist.

Vorteilhafterweise wird ein Teilbereich des Anzeigemittels, welcher im Wesentlichen das Objekt umschließt, an die Änderung des elektrischen Feldes angepasst dargestellt. Dadurch kann das Objekt mit der Umgebung oder anderen daneben stehenden Objekten bzw. Texten, zusammen dargestellt werden. Nähert sich ein Finger der Anzeigemitteloberfläche, wird ein Bereich, der in der Nähe des Fingers ist, durch ein Objekt des Anzeigemittels erst vergrößert dargestellt.

Gemäß einer anderen vorteilhaften Ausgestaltung der Erfindung weist die Eingabevorrichtung Rechenmittel zur Auswertung der Änderung des Felds auf, wobei die Anzeigegröße, Position und Aussehen des Objekts nach einem Ergebnis der Auswertung geändert oder das Objekt nach einem Ergebnis der Auswertung angezeigt wird. Nur wenn sich der Finger einem Objekt auf dem Bildschirm bis zu einem gewissen Abstand nähert und damit das Feld auf einen bestimmten Stärkewert geändert, wird bspw. das Objekt dort vergrößert oder verändert dargestellt. Dahingegen wird eine geringe Änderung des Feldes nicht als eine Eingabeaktion angesehen.

Gemäß einer anderen vorteilhaften Ausgestaltung der Erfindung werden die Darstellungsgröße und/oder die Position des Objektes durch ein Skalierungsmittel der Eingabevorrichtung gesteuert. Das Skalierungsmittel kann z.B. durch eine Zoomeinrichtung ausgebildet werden. Die Darstellungsgröße des Objektes wird dann abhängig vom Zoomfaktor gesteuert. Durch das Skalierungsmittel kann das Objekt bequem verkleinert oder vergrößert werden. Wenn das Objekt zum ersten Mal zu groß oder noch zu klein dargestellt wird, kann man das Objekt durch das Skalierungsmittel noch feiner einstellen. Das Objekt wird automatisch so positioniert das es immer sichtbar ist und weder vom Bedienobjekt verdeckt noch aus dem Display geschoben wird.

Gemäß einer anderen vorteilhaften Ausgestaltung der Erfindung weisen die zweiten Mittel zwei transparente, elektrisch leitfähige, beschichtete Schichten auf, wobei die zwei Schichten übereinander auf dem Berührungsbildschirm angeordnet werden. Zwischen den beiden Schichten entsteht ein Luftzwischenraum. Wird die obere Folie gedrückt, entsteht zwischen den beiden Folien ein elektrischer Kontakt. Da die Folien vergleichbar einer Widerstandsmatrix sind, lassen sie direkte Rückschlüsse auf die X- und Y-Koordinaten zu, an der der Kontakt erfolgt ist. Die zweiten Mittel können auch auf Basis von Infrarot oder technisch vergleichbaren Material ausgebildet werden.

Die Eingabevorrichtung ist auch für Panels (z.B. Tasten-Panels, Touch-/Tasten Panels), insbesondere Bedienpanels eines Automatisierungssystems, anwendbar.

Nachfolgend wird die Erfindung anhand der in den Figuren dargestellten Ausführungsbeispiele näher beschrieben und erläutert. Es zeigen:
- FIG 1: ein Beispiel einer erfindungsgemäßen Eingabevorrichtung,
- FIG 2: ein Beispiel einer erfindungsgemäßen Eingabevorrichtung auf Basis eines Tasten-Panels

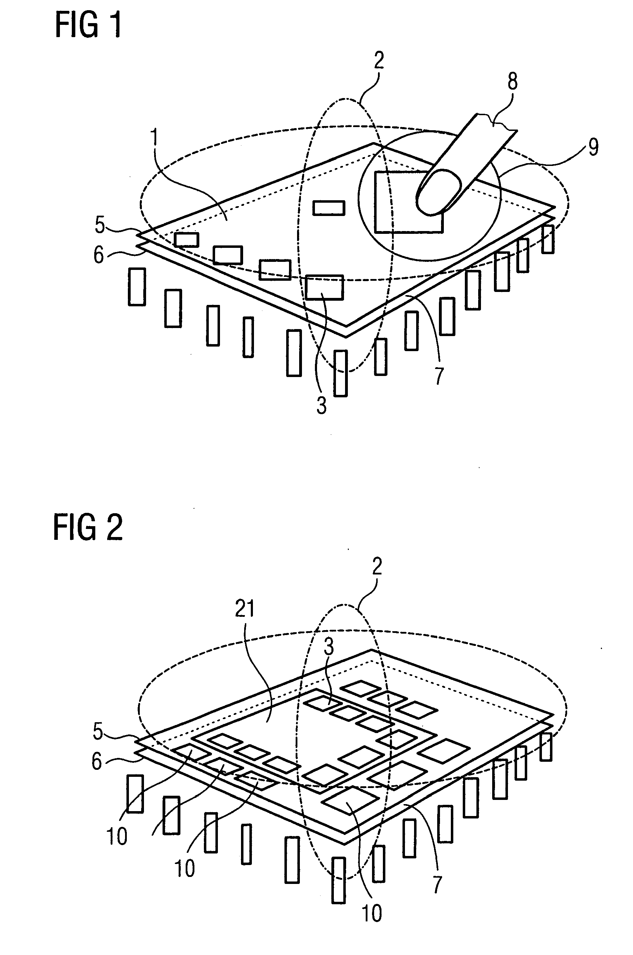

In der FIG 1 wird beispielsweise eine Eingabevorrichtung mit einem Berührungsbildschirm 1 (Touchscreen) angezeigt, wobei mehrere graphische Objekte oder Symbole 3 zur Ausführung einer Eingabefunktion auf dem Berührungsbildschirm 1 dargestellt sind. Die Eingabevorrichtung weist kapazitive Mittel zur Erzeugung eines kapazitiven Felds 2 und zur Positionierung einer Änderung des erzeugten, kapazitiven Felds 2 auf. Das Feld 2 befindet sich über der Berührungsbildschirmsoberfläche.

Dabei werden z.B. vier Ecken des Berührungsbildschirms 1 kontaktiert und mit einer Wechselspannung beaufschlagt, die ein schwaches kapazitives Feld 2 erzeugen. Durch Fingernähe wird dieses Feld 2 kapazitiv beeinflusst. Das bedeutet ein Anzeichen einer Eingabe. Nähert sich der Finger 8 einem angezeigten Objekt 3, wird ein Bereich 9, der wesentlich das Objekt 3 umfasst, des Berührungsbildschirms 1 größer dargestellt. Das Objekt 3 in diesem Bereich 9 kann also noch vor einer Berührung, ähnlich wie eine "Lupenfunktion", vergrößert werden. Wird ein Bereich am Rande des Berührungsbildschirms 1 berührt, wird der Bildinhalt innerhalb des Bereiches vergrößert und automatisch so verschoben angezeigt, dass dieser Inhalt vollständig erkannt werden kann.

Die Eingabevorrichtung weist resistive Mittel 4 zur Positionierung und zur Bestätigung einer Eingabe auf. Dabei werden zwei transparente, elektrisch leitfähige Folien 5, 6 angegeben, wobei die zwei Folien 5, 6 übereinander auf dem Berührungsbildschirm 1 angeordnet sind. Zwischen den beiden Folien 5, 6 entsteht ein Luftzwischenraum 7. An die obere Folie 5 wird Strom angelegt. Drückt man nun mit seinem Finger auf die obere Folie 5, so gelangt diese mit der unteren Folie 6 an einem Berührpunkt in Kontakt und so entsteht dazwischen eine elektrische Verbindung. Da die Folien als ein "Widerstandsmatrix" verwendet werden können, ist ein direkter Rückschluss auf die X- und Y-Koordinaten, an der ein Kontakt erfolgt ist, möglich. Somit kann ermittelt werden, wo der Benutzer gedrückt hat und welches Objekt vom Benutzer zur Eingabe ausgewählt wurde.

Die Eingabevorrichtung weist weiterhin Rechenmittel (z.B. Mikrocontroller) zur Auswertung der Änderung des kapazitiven Felds 2 auf. Die Rechenmittel können z.B. auf Basis der Ermittelung eines Spannungsabfalls fungieren. Nur wenn sich der Finger 8 einem Objekt 3 auf dem Bildschirm 1 bis zu einem geringen Abstand nähert und damit die Stärke des kapazitiven Felds 2 auf einen bestimmten Wert geändert wird, kann das Objekt 3 vergrößert dargestellt werden. Im Gegensatz dazu, kann eine kleine Änderung des Felds 2 nicht als ein Eingabeanzeichen angesehen werden. Wenn bspw. der Finger nur leicht abgehoben wird, bleibt die "Lupenfunktion" bis zur nächsten Berührung erhalten. Nur wenn sich der Finger 8 weit entfernt vom Objekt bewegt, wird das Objekt 3 wieder in seiner ursprünglichen Anzeigegröße dargestellt. Berührt der Finger 8 die Berührungsbildschirmoberfläche, wo das Objekt angezeigt ist, kann das Objekt 3 wie bei einem herkömmlichen Touchscreen selektiert und ausgeführt werden.

FIG 2 zeigt ein Tasten-Panel, bei dem Funktionstasten 10 rund um den Bildschirm 21 mit Ikonen 3 am Displayrand beschriftet werden. Alle Ikonen 3, die Tasten 10 zugewiesen sind, werden nur eingeblendet, wenn ein Finger eines Benutzers in die Nähe der Panelfront gebracht wird. So kann das komplette Display vom Anwender zum Beobachten genutzt werden, ohne dass die Ikonen 3 permanent Platz vom Bildschirm 21 nehmen.

## Patentansprüche

1. Eingabevorrichtung mit Anzeigemittel (1), wobei
- die Eingabevorrichtung erste Mittel zur Erzeugung eines elektrischen Felds (2) über dem Anzeigemittel (1) und zur
Positionierung einer Änderung des Felds (2) bei einer Eingabe aufweist,
- mindestens ein Objekt (3) zur Anzeige einer Eingabefunktion auf dem Anzeigemittel (1) darstellbar ist, und
- die Anzeige, insbesondere die Anzeigegröße, des mindestens einen Objektes (3) an die Änderung des Felds (2) anpassbar ist.

2. Eingabevorrichtung nach Anspruch 1, wobei
das Anzeigemittel (1) ein Berührungsbildschirm ist, und wobei eine Eingabefunktion durch Wählen des Objektes (3) ausführbar ist.

3. Eingabevorrichtung nach Anspruch 1 oder 2, wobei
die erste Mittel kapazitive Mittel sind, wobei ein kapazitives Feld (2) durch diese Mittel über dem Anzeigemittel (1) erzeugbar ist.

4. Eingabevorrichtung nach einem der Ansprüche 1 bis 3, wobei die Eingabevorrichtung zweite Mittel (4), insbesondere resistive Mittel, zur Positionierung und zur Bestätigung einer Eingabe aufweist.

5. Eingabevorrichtung nach einem der Ansprüche 1 bis 4, wobei die Anzeige, insbesondere die Anzeigegröße, eines Teilbereichs (9) des Anzeigemittels (1), welcher im Wesentlichen das Objekt (3) umschließt, an die Änderung des elektrischen Felds (2) anpassbar ist.

6. Eingabevorrichtung nach einem der Ansprüche 1 bis 5, wobei die Eingabevorrichtung Rechenmittel zur Auswertung der Änderung des Felds (2) aufweist, wobei die Anzeige des Objekts (3) nach einem Ergebnis der Auswertung änderbar ist.

7. Eingabevorrichtung nach einem der Ansprüche 1 bis 6, wobei die Eingabevorrichtung ein Skalierungsmittel, insbesondere eine Zoomeinrichtung, zur Steuerung der Anzeigegröße und/oder der Position des Objektes (3) aufweist.

8. Eingabevorrichtung nach einem der Ansprüche 1 bis 7, wobei die zweiten Mittel zwei transparente, elektrisch leitfähig beschichtete Schichten (5,6) aufweisen, wobei die zwei Schichten (5,6) übereinander auf dem Anzeigemittel (1) anordenbar sind, und wobei ein Luftzwischenraum (7) zwischen den beiden Schichten (5,6) vorhanden ist.

9. Panel, insbesondere Bedienpanel eines Automatisierungssystems mit einer Eingabevorrichtung nach einem der Patentansprüche 1 bis 8.
